# EUROPEAN PATENT SPECIFICATION

(11) **EP 0 474 318 B1**
(45) Date of publication and mention of the grant of the patent: **24.04.1996**
(21) Application number: 91202603.6
(22) Date of filing: 04.02.1988
(51) Int. Cl.: F16K 5/06, F16K 27/06, F16K 5/20

(54) **Ball valve**
Kugelventil
Robinet à boisseau sphérique

(30) Priority: 06.02.1987 US 11753
(43) Date of publication of application: 11.03.1992
(62) Divisional of application: 88300930.0
(73) Proprietor: WHITEY CO., Highland Heights, OH 44143 (US)
(72) Inventor: Wozniak, Richard Frank, Euclid, Ohio 44132 (US); Williams, Peter Charles, Cleveland Heights, Ohio 44121 (US); Stewart, Robert Charles, Northfield Center, Ohio 44067 (US)
(74) Representative: W.P. THOMPSON & CO.

(56) References cited:
- FR-A- 1 472 357
- FR-A- 2 540 963
- GB-A- 981 013
- GB-A- 1 216 354
- US-A- 3 033 227
- US-A- 3 288 430
- US-A- 3 357 679
- US-A- 3 598 363
- US-A- 3 642 248
- US-A- 4 258 900

## Description

The invention relates to ball valves.

The invention is especially suited for small, compact multi-service ball valves; however, the invention could be applied to valves of many sizes or in special service valves. The manufacture of ball valve bodies or housings often requires a significant amount of relatively complex machining whether the bodies are formed from bar stock, forged or cast. To simplify the machining without seriously affecting the performance of the valves, the housings have often been designed as multi-part assemblies having separate bonnet components and screw-threadedly attached end pieces. In addition, to simplify the internal machining, the valves have often been provided with separate inserts or sleeve-like members for carrying the ball seal and body seal elements. Consequently, the resulting valves have often been relatively complex and/or a compromise in design.

The above discussed manufacturing and design problems are amplified for smaller sized ball valves such as those for process and instrumentation purposes. Also, the designs available often do not ensure that the stems, seats and/or balls will be blow-out proof.

An object of the present invention is to provide an extremely rugged design of ball valve which is especially suited for use in small size ball valves. The design is relatively simple and offers advantages for valves used in high pressure service since both the ball and the operating stem are blow-out proof.

A primary object of the invention is the provision of a ball valve which is especially adapted for manufacture in small sizes.

A further object of the invention is the provision of a ball valve of the type in which the bearing surfaces of the stem or operating assembly are isolated from the valve chamber so that the bearing surfaces are non-wetted surfaces.

US-A-3598363 discloses a ball valve comprising a valve body made of first and second unitary body components releasably secured to one another so that the second body component closes a valve chamber, the first and second body components respectively having first and second axially aligned flow passages therein opening into said valve chamber through the end walls thereof, a valve ball in the valve chamber, seat rings disposed in said valve chamber and biassed into engagement with said valve ball, an operating stem extending through a stem-receiving opening in the first body component for rotating the ball, and stem seal means for sealing the stem to the stem-receiving opening, the first body component having an inwardly facing shoulder through which the stem-receiving opening extends to the exterior of the first body component and the operating stem having an outwardly extending flange located axially inwardly of the inwardly facing shoulder;
wherein the first body component has a first sleeve section formed about the first flow passage

which extends axially inwardly of the valve chamber and defines with an axially extending, radially outwardly spaced inner surface of the first body component a first annular recess; and wherein the second body component has inner second and outer third radially spaced integral sleeve sections extending axially inwardly of said valve chamber about said second flow passage to define therebetween a second annular recess, with the inner second sleeve section aligned with the first sleeve section on the first body component, and the inner surface of the outer third sleeve section aligned with the said inner surface of the first body component, the seat rings being positioned respectively in said first and second annular recesses. The ball valve according to the invention is characterised in that the said inner surface of the outer third sleeve and the said inner surface of the first body component delimit the valve chamber radially such that it is of substantially uniform diameter throughout its extent as defined between the end walls thereof and is of at least the same diameter as the ball valve; and the stem seal means is located inwardly of said flange and between said flange and a stem shoulder on said operating stem and a resilient bearing ring is located between said flange and said shoulder.

US-A-4258900 describes a ball valve in which the seat rings are positioned in respective annular recesses in respective unitary body components. However, there is no stem flange and the stem-receiving opening is defined between the two body components. US-A-4111393 shows a valve similar to that of US-A-4258900 but the stem-receiving opening is in the fist unitary body component. The ball is trunnion mounted. The stem flange is outside the shoulder and the latter faces outwardly.

The design of the stem-receiving opening with an integral flange having the stem shoulder thereon and the relationship of the stem flange, stem shoulder and stem bearing are such that the stem is blow-out proof. In addition, the stem bearing surfaces are sealed from the interior of the valve chamber so that the bearing surfaces are non-wetted.

In accordance with a preferred aspect of the invention, the valve chamber has an enlarged counterbore formed at the first end thereof. The counterbore is sized to receive the outer sleeve section of the second body component and to define an annular space between the outer sleeve section and the first body component.

Yet another object is the provision of a ball valve which is capable of bi-directional use and has a floating ball.

The end of each seat ring remote from the ball preferably includes integrally formed inner and outer continuous walls or lips which extend axially into the associated recess on radially opposite sides of the associated O-ring. The O-rings are sized to be received within the continuous walls or lips and to maintain their associated seat ring compressively engaged with the ball throughout a portion of the range of axial movement of the ball. The O-rings are sized relative to the associated recess and the seat ring to limit axial movement of the ball towards the sleeve sections to prevent the ball from engaging the sleeve sections under even extremely high pressure conditions. In addition, the continuous lips confine the O-ring and prevent O-ring extrusion under high pressure conditions.

In operation, the O-rings act to maintain sufficient preload on the seat rings to seal with the ball under low line pressure. However, as line pressure increases, the ball moves towards the downstream seat, causing increased sealing pressure between the ball and the downstream seat ring. The downstream seat ring does, however, have some freedom to move against its respective biassing O-ring, at least until the maximum compression of the O-ring is achieved as controlled by the space available in the annular seat ring-receiving recess.

The invention is further described, by way of example, with reference to the accompanying drawings, wherein:
Fig. 1 is a perspective view of a ball valve in accordance with the present invention;
Fig. 2 is an end elevational view of the left-hand end of the valve of Fig. 1;
Fig. 3 is an end elevational view of the right-hand end of the valve of Fig. 1;
Fig. 4 is a longitudinal sectional view of the valve of Fig. 1;
Fig. 5 is an enlarged sectional view of the valve chamber portion of Fig. 4, with the valve element in a closed position; and
Fig. 6 is a view, similar to Fig. 5, but showing the valve element moved to its maximum downstream position under the influence of a high upstream pressure.

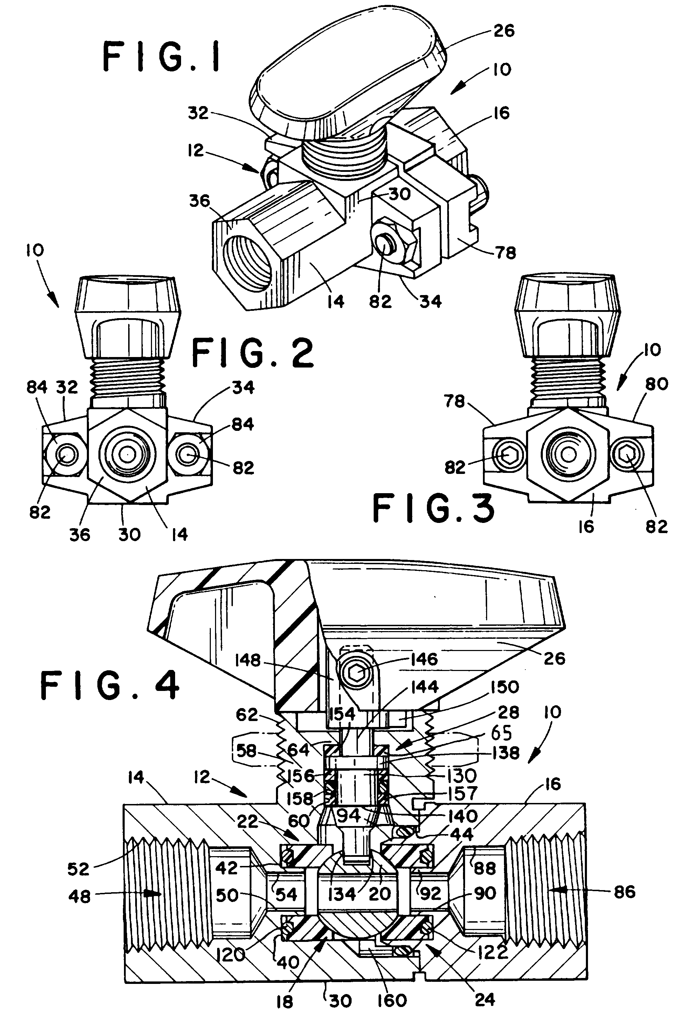

Referring to Figs. 1 to 4, a ball valve 10 comprises a housing or body 12 formed of a pair of co-operating first and second body components 14 and 16. As shown in Fig. 4, the body or housing 12 defines a cylindrical, internal valve chamber 18 which carries a rotatably mounted valve element or ball member 20 and co-operating seat or seal assemblies 22 and 24. The ball member 20 is arranged to be rotated between open and closed positions by a handle 26 suitably connected to the ball 20 through a stem assembly 28.

In particular, the first body component 14 includes a generally rectangular first end portion 30 which has a pair of outwardly extending flange sections 32 and 34 formed integrally therewith. A hexagonal-shaped second end portion 36 is axially aligned with the first end portion 30. As best shown in Fig. 4, a generally cylindrical opening 40 extends axially inwardly from the first end of body component 14 and partly defines the valve chamber 18. The opening 40 terminates in a generally transversely extending end wall 42 which defines a first end of valve chamber 18. An enlarged counterbore 44 is formed about the inlet end of the opening 40 for reasons to be described.

Extending axially into the body component 14 from the second end is a cylindrical flow passage 48 which connects with and is axially aligned with the valve chamber 18. The passage 48 has a reduced diameter inner end portion 50 and a larger diameter outer end portion 52. Means are provided to permit the passage 48 to be connected to fluid flow lines and the like. Many different types of conventional connecting means could be used. As shown, however, the large diameter portion of the flow passage 48 is provided with female pipe threads for this purpose.

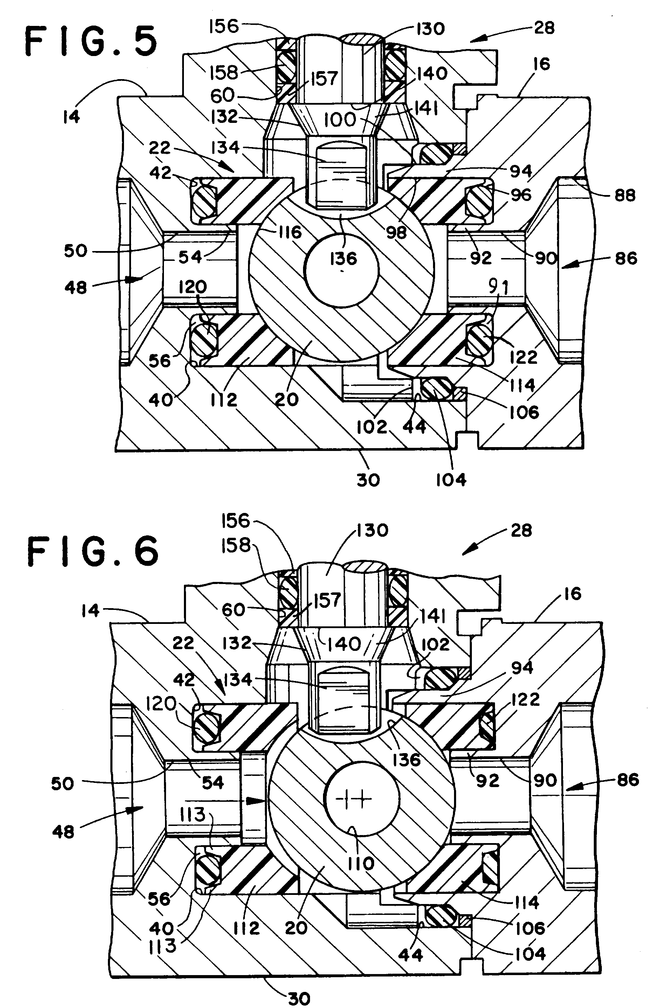

Closely surrounding the inner end 50 of passage 48 is a sleeve section 54 which extends axially into the valve chamber 18. The sleeve section 54 in combination with the outer wall of opening 40 defines an axially open annular recess 56 (Fig. 5).

Formed integrally with the rectangular end portion 30 of body component 14 is a generally cylindrical bonnet portion 58. As illustrated, the bonnet portion 58 is provided with external threads 62 to permit the valve to be panel-mounted, if desired.

Formed axially through the bonnet portion 58 transversely to the valve chamber 18 is a stem-receiving opening 60. The opening 60 leads to the exterior of the body through a shoulder 65 on a radially inwardly extending circular flange portion 64.

Body component 16 has a generally hexagonal configuration with a pair of laterally extending flange sections 78 and 80. The flange sections 78 and 80 are generally of corresponding shape to the previously mentioned flange sections 32,34 of body component 14. The flange sections are provided with aligned openings to allow the body components 14 and 16 to be suitably and releasably interconnected, such as through the use of socket head capscrews 82 and nuts 84 as shown. In addition, the flange sections 32 and 34 are provided with recesses sized so as to engage the associated nuts 84 to prevent them rotating during tightening of the capscrews 82. Recesses provided on flanges 78 and 80 to receive the heads of the socket head capscrews 82 are similar.

As best shown in Figs. 4 and 5, the inner end of body component 16 is arranged to engage with the first end of body component 14 and close the outer end of the valve chamber 18. The body component 16 has an axially extending flow passage 86. The flow passage 86 has a large diameter section 88 and an inner, smaller diameter section 90 which opens axially to the valve chamber 18. As shown, the outer end of passageway 86 is provided with female pipe threads for permitting connection of the valve to associated flow lines.

The inner end wall 91 of the body component 16 is provided with radially spaced and circumferentially continuous second and third sleeve sections 92 and 94 (Fig. 5). The second or inner sleeve section 92 is positioned closely about the opening 90 and extends axially of the valve chamber 18 towards the sleeve section 54. The third or outer sleeve section 94 is located radially outwardly of the second sleeve section 92 and, in combination therewith, defines an axially open annular recess or groove 96 which is aligned with and generally of the same size as the annular recess 56. The inner wall 98 of the outer sleeve section 94 is located at a diameter corresponding to the diameter of opening 40 which defines the valve chamber 18. The outer wall 100 of the sleeve section 94 is spaced radially inwardly of the counterbore 44 of opening 40 to define a circumferentially continuous chamber 102. The mating body components 14 and 16 are sealed by a resilient O-ring 104 in the chamber 102. Blow-out of the O-ring 104 is prevented by a back-up ring 106 located in the chamber 102 in engagement with the end face of body component 16.

As shown, ball 20 has a central passage 110 which, as is conventional, can be rotated into alignment with the flow passages 48,86 as shown in Fig. 4 or, rotated 90° to a closed position as shown in Fig. 5. The ball 20 is mounted axially within the valve chamber 18 between opposed seat rings 112 and 114. The seat rings 112 and 114 are of identical configuration so that only seat ring 112 will be described in detail and the description thereof is equally applicable to seat ring 114. As shown in Fig. 5, seat ring 112 comprises a solid annular body formed from a suitable resilient material, such as polyethylene, PTFE, or the like depending upon the pressures and/or other environmental conditions to which the seat ring is to be subjected. The ring 112 is sized so as to be closely but slidably received in the recess 56. The seal face 116 of the ring 112 is contoured to closely engage the ball 20 and has a radius on the seal face 116 substantially equal to the radius of the ball.

The end face of each seat ring 112, 114 remote from the ball 20 is provided with radially inner and outer circumferentially continuous short walls or lips 113 (Fig. 6). The lips 113 are integral with the body of the respective seat ring and extend axially therefrom. An O-ring 120 or 122 is received between the associated lips 113. Preferably, the lips 113 are shorter than the normal or uncompressed thickness of the associated O-ring 120 or 122 and closely engage the walls of the associated recess on radially opposite sides of the O-ring. The function of lips 113 will subsequently be explained in more detail but their primary purpose is to radially confine the O-ring 120 and prevent extrusion of the O-ring under high pressure conditions.

The seat ring 112 and the opposed seat ring 114 are both maintained under a bias towards the ball by the O-rings 120 and 122 being compressed, respectively, between the end faces of the annular recesses 56 and 96 and the associated seat ring. The overall length, in an axial direction, of the seat rings and the associated O-rings 120,122 are related to the valve chamber and the ball 20 such that, in the position shown in Fig. 5 the seat rings sealingly engage the ball with a predetermined contact force sufficient to ensure sealing under low pressure conditions.

Fig. 6 shows the ball and the seat ring relationships under conditions of high pressure. Specifically, the ball 20 is mounted so that it can move axially of the valve chamber in response to high upstream pressure conditions. As shown, with a high pressure present in flow passage 48, the ball 20 is moved towards seat ring 114 thereby increasing the seal pressure between the seal face of ring 114 and the ball. With the increased pressure acting against ring 114, the ring moves into recess 96, compressing O-ring 122. During compression of O-ring 122, the O-ring is confined radially by the lips 113. The compression of the O-ring 122 applies radial forces to the lips 113, causing them to engage the walls of the recess 96 more tightly. This relationship prevents extrusion of the O-ring 122 about the seat ring 114.

As compression of the downstream O-ring 114 takes place, the upstream seat ring 112 moves with the ball 20 for a short distance. However, with continued movement of the ball, the seal between seat ring 112 and the ball is broken and the valve chamber area surrounding the ball is subjected to the increased pressure. The O-rings 120 and 122 are related to the available space in their respective recesses 56 and 96 such that the maximum movement permitted by the associated seat ring does not enable contact to take place between the ball and the first and second sleeve sections 54 and 92.

It is important that the seat rings 112 and 114 are substantially fully confined and enclosed about both their inner and outer surfaces when they are in their maximum loaded conditions. By so confining the seat rings, cold flow and distortion of the seat ring at the downstream end under high pressure conditions is eliminated. The forces acting on the seat rings are thus substantially pure compression loads which the materials from which such seat ring are formed can withstand better than bending or tension. Also, the seat rings, the O-rings, and the ball seat cavities are identical to one another and the valve is therefor bi-directional. That is, it can be used with either of the flow passages 48 or 86 serving as the upstream or inlet passage. When flow passage 86 is the inlet passage, the ball 20 moves towards seat ring 112 under high pressure conditions in the same manner as previously discussed with respect to seat ring 114 when passage 48 is serving as the inlet.

A further feature is the overall construction and arrangement of the stem assembly 28. As previously discussed, stem assembly 28 is arranged to be blow-out proof in that the stem and related elements are totally confined within the valve body by the previously mentioned flange 64. Additionally, the assembly provides non-wetted bearing surfaces for the stem.

Specifically, stem assembly 28 includes a unitary, one-piece stem member 130 having a reduced diameter lower end portion 132. Portion 132 is provided with a pair of oppositely facing flats 134 which are freely received in an arcuate, flat sided groove 136 formed in the ball 20 (Figs. 4 and 5). The recess or groove 136 in ball 20 provides a driving connection between the stem 130 and the ball 20 while permitting the ball to be free to move in the downstream direction under the influence of high upstream pressures when the valve is in the closed position. For this reason, groove 136 extends transversely of the ball passage 110.

Stem 130 further includes a radially extending integral flange 138 (Fig. 4). Flange 138 has a diameter only slightly less than the diameter of opening 60. Also carried on stem 130 is a radially extending shoulder 140. Preferably the upper surface of shoulder 140, extends perpendicular to the axis of stem 130, while the lower surface is tapered as shown. The relationship between flange 138, shoulder 140 and the flange 64 on the upper end of opening 60 provides enclosed entrapment chambers for the bearing and seal elements which will subsequently be described.

The upper end of stem 130 has a reduced diameter portion 144 which extends outwardly through flange 64 to the exterior of the body component 14. Handle 26 is connected to the upper end of the stem portion 144 in any convenient manner such as through the use of a setscrew 146.

As shown, handle 26 is moulded from plastic and has a generally oval, elonagated configuration, best shown in Fig. 1. The oval configuration provides a readily visible indication of the position of the valve. Preferably, the handle 26 includes a metal insert 148 which is moulded into the plastic of the handle body. Preferably, the insert 148 has an integral stop portion 150 which is arranged to engage suitable stop surfaces (not shown) formed in the outer end of bonnet portion 58. Also, the insert 148 has opposed flats on its sides such that, if the handle is broken or shattered, the valve could be operated by applying a wrench to the insert.

Referring again to the operating stem assembly 28, the stem member 130 is sealed and guided by resilient rings 154,156 and 157, and an O-ring 158. Ring 154 is captured between the upper stem flange 138 and the shoulder 65. This ring is preferably made from a relatively, stiff but resilient material such as a filled PTFE, or the like. Rings 156 and 157 are positioned beneath flange 138 on opposite sides of 0-ring 158. The spacing between the underside of flange 138 and shoulder 140 is related to the total thickness of rings 156,157 and 158 so as to provide a slight precompression on 0-ring 158.

The main guiding and bearing surfaces for the stem 130 are provided by rings 154 and 156. The placement of 0-ring 158 at the location shown allows the bearing and guide surfaces provided by rings 154 and 156 to be non-wetted surfaces and isolated from the fluid within the valve chamber.

Because the stem 130 is totally captured within the opening 60 and is not held therein by threaded or bolted connections, the valve is generally considered to to blow-out proof. In addition, because of the arrangement of the stem it must be assembled from the exterior of body component 14 by being inserted into the bore 44 from the outer end thereof prior to attachment of body component 16. Because of the overall length of the stem 130 and the diameter of opening 40, the body component 14 is provided with a relief area or cutout 160 which provides a space for the insertion of stem 130.

The invention has been described with reference to a preferred embodiment. Alterations and modifications are included insofar as they come within the scope of the claims.

## Claims

1. A ball valve comprising a valve body (12) made of first and second unitary body components (14 and 16) releasably secured to one another so that the second body component (16) closes a valve chamber (18), the first and second body components (14, 16) respectively having first and second axially aligned flow passages (48 and 86) therein opening into said valve chamber (18) through the end walls (42 and 91) thereof, a valve ball (20) in the valve chamber (18), seat rings (112, 114) disposed in said valve chamber (18) and biased into engagement with said valve ball (20), an operating stem (130) extending through a stem-receiving opening (60) in the first body component (14) for rotating the ball (20), and stem seal means (158) for sealing the stem (130) to the stem-receiving opening (60), the first body component (14) having an inwardly facing shoulder (65) through which the stem-receiving opening (60) extends to the exterior of the first body component (14) and the operating stem (130) having an outwardly extending flange (138) located axially inwardly of the inwardly facing shoulder (65); wherein the first body component (14) has a first sleeve section (54) formed about the first flow passage (48) which extends axially inwardly of the valve chamber (18) and defines with an axially extending, radially outwardly spaced inner surface of the first body component (14) a first annular recess (56); and wherein the second body component (16) has inner second and outer third radially spaced integral sleeve sections (92, 94) extending axially inwardly of said valve chamber (18) about said second flow passage (86) to define therebetween a second annular recess (96), with the inner second sleeve section (92) aligned with the first sleeve section (54) on the first body component (14), and the inner surface (98) of the outer third sleeve section (94) aligned with the said inner surface of the first body component, the seat rings (112, 114) being positioned respectively in said first and second annular recesses (56, 96), characterised in that the said inner surface (98) of the outer third sleeve (94) and the said inner surface of the first body component (14) delimit the valve chamber (18) radially such that it is of substantially uniform diameter throughout its extent as defined between the end walls (42 and 91) thereof and is of at least the same diameter as the ball valve 20; and the stem seal means (158) is located inwardly of said flange (138)and between said flange (138) and a stem shoulder (140) on said operating stem (130) and a resilient bearing ring (154) is located between said flange (138) and said shoulder (65).

2. A ball valve as claimed in claim 1, wherein a seal ring (104) is located between said outer third sleeve section (98) and said first body component (14).

3. A ball valve as claimed in claim 1 or 2, wherein said valve chamber (18) has an enlarged counterbore (44) formed at the outer end thereof, said counterbore (44) being sized to receive said outer third sleeve section (94) of said second body component (16) and to define an annular chamber (102) between said outer sleeve section (94) and said first body component (14).

4. A ball valve as claimed in claim 3, wherein said first and second body components (14, 16) are sealed to one another by a seal ring (104) located in said annular chamber (102).

5. A ball valve as claimed in any of claims 1 to 4, wherein said stem seal means comprise a pair of ring members (158,156) closely engaged with the wall of said stem-receiving opening (60).

6. A ball valve as claimed in any of claims 1 to 5, wherein an outermost circumferential surface of each of said seat rings (112,114) is confined by the outer cylindrical side wall of the respective annular recess (56,96).

7. A ball valve as claimed in any of claims 1 to 6, wherein said valve ball (20) is mounted for a limited range of movement axially of the valve chamber (18), and in which resilient O-rings (120,122) closely surrounds the respective sleeve sections (54,92) and engage the respective end walls (42,91), and said O-rings (120,122) are each sized to engage one end of the respective seat ring (112 or 114) and thereby urge the latter by its other end (116) into sealing engagement with the valve ball (20) throughout a portion of the range of axial movement of the latter, and to limit axial movement of the ball (20) towards the respective sleeve section (54 or 92) and thereby prevent the ball (20) from engaging such sleeve section (54 or 92).

8. A ball valve as claimed in claim 7, wherein said seat rings (112,114) each include relatively short lips (113) located on the ends thereof remote from the ball (20), and said lips (113) extend axially of the seat rings (112,114) on radially opposite sides of the respective O-ring (120,122).

9. A ball valve as claimed in claim 7 or 8, wherein each of said O-rings (120,122) is compressed by axial movement of the valve ball (20) in a direction towards its respective sleeve section (54 or 92) and the total volume of said seat rings (112,114) is related to the volume of their respective annular recesses (56,96) to limit compression of the O-rings (120,122) to a point such that contact between the ball (20) and the respective sleeve section (54 or 92) cannot take place.

10. A ball valve as claimed in any of claims 1 to 9, wherein said stem seal means (158) comprises a sealing ring (158) located between the flange (138) and the stem shoulder (140) and a back-up ring (156) located between said sealing ring (158) and said flange (138).

11. A ball valve as claimed in claim 10, wherein said sealing ring (158) comprises an O-ring radially compressed between said stem (130) and the wall of the cylindrical stem-receiving opening (60).

12. A ball valve as claimed in any of claims 1 to 11, wherein said stem (130) is maintained in an outer position by a handle (26) releasably joined to the outer end of said stem (130).

13. A ball valve as claimed in any preceding claim, in which each of said body components (14,16) has a pair of outwardly extending flange sections (32,34,78,80) provided with aligned openings for receiving connecting means (82,84) to interconnect the body components (14,16).

## Patentansprüche

1. Kugelventil umfassend ein Ventilgehäuse (12) aus einem ersten und einem zweiten Einheitsgehäuseteil (14 und 16), die lösbar aneinander befestigt sind, so daß der zweite Gehäuseteil (16) eine Ventilkammer (18) schließt, wobei der erste und zweite Gehäuseteil (14, 16) durch die Endwände (42 und 91) dieser in die genannte Ventilkammer (18) einmündende erste bzw. zweite axial ausgerichtete Durchflußkanäle (48 und 86) haben, eine Ventilkugel (20) in der Ventilkammer (18), in der genannten Ventilkammer (18) angeordnete und mit der genannten Ventilkugel (20) in Eingriff vorgespannte Sitzringe (112, 114), eine durch eine Spindelaufnahmeöffnung (60) im ersten Gehäuseteil (14) verlaufende Betätigungsspindel (130) zum Drehen der Kugel (20), und ein Spindeldichtungsmittel (158) zum Abdichten der Spindel (130) in der Spindelaufnahmeöffnung (60), wobei der erste Gehäuseteil (14) eine nach innen gerichtete Schulter (65) hat, durch welche die Spindelaufnahmeöffnung (60) zur Außenseite des ersten Gehäuseteils (14) verläuft, und die Betätigungsspindel (130) einen nach außen verlaufenden Flansch (138) hat, der zu der nach innen gerichteten Schulter (65) axial innenliegend angeordnet ist; wobei der erste Gehäuseteil (14) einen über dem ersten Durchflußkanal (48) geformten ersten Muffenabschnitt (54) hat, der sich von der Ventilkammer (18) axial nach innen erstreckt und mit einer axial verlaufenden, mit Zwischenraum radial nach außen angeordneten inneren Oberfläche des ersten Gehäuseteils (14) eine erste ringförmige Vertiefung (56) definiert, und wobei der zweite Gehäuseteil (16) einen inneren zweiten und einen äußeren dritten, radial mit Zwischenraum angeordneten, integrierten Muffenabschnitt (92, 94) hat, die sich von der genannten Ventilkammer (18) axial nach innen um den genannten zweiten Durchflußkanal (86) erstrecken, um dazwischen eine zweite ringförmige Vertiefung (96) zu definieren, wobei der innere zweite Muffenabschnitt (92) auf den ersten Muffenabschnitt (54) am ersten Gehäuseteil (14) ausgerichtet ist und die innere Oberfläche (98) des äußeren dritten Muffenabschnitts (94) auf die genannte innere Oberfläche des ersten Gehäuseteils ausgerichtet ist, wobei die Sitzringe (112, 114) in der genannten ersten bzw. zweiten ringförmigen Vertiefung (56, 96) positioniert sind, dadurch gekennzeichnet, daß die genannte innere Oberfläche (98) der äußeren dritten Muffe (94) und die genannte innere Oberfläche des ersten Gehäuseteils (14) die Ventilkammer (18) radial so abgrenzt, daß sie in ihrem gesamten, wie zwischen den Endwänden (42 und 91) davon definierten, Ausmaß einen im wesentlichen einheitlichen Durchmesser hat und mindestens den gleichen Durchmesser wie das Ventilkugel 20 hat, und daß das Spindeldichtungsmittel (158) vom genannten Flansch (138) nach innen und zwischen dem genannten Flansch (138) und einer Spindelschulter (140) an der genannten Betätigungsspindel (130) angeordnet ist und zwischen dem genannten Flansch (138) und der genannten Schulter (65) ein elastischer Lagerring (154) angeordnet ist.

2. Kugelventil nach Anspruch 1, wobei zwischen dem genannten äußeren dritten Muffenabschnitt (98) und dem genannten ersten Gehäuseteil (14) ein Dichtungsring (104) angeordnet ist.

3. Kugelventil nach Anspruch 1 oder 2, wobei die genannte Ventilkammer (18) an ihrem äußeren Ende eine vergrößerte Senkung (44) aufweist, wobei die Größe der genannten Senkung (44) auf das Aufnehmen des genannten äußeren dritten Muffenabschnitts (94) des genannten zweiten Gehäuseteils (16) und zum Definieren einer ringförmigen Kammer (102) zwischen dem genannten äußeren Muffenabschnitt (94) und dem genannten ersten Gehäuseteil (14) ausgelegt ist.

4. Kugelventil nach Anspruch 3, wobei der genannte erste und zweite Gehäuseteil (14, 16) durch einen in der genannten ringförmigen Kammer (102) angeordneten Dichtungsring (104) gegeneinander abgedichtet sind.

5. Kugelventil nach einem der Ansprüche 1 bis 4, wobei das genannte Spindeldichtungsmittel ein Paar eng an der Wand der genannten Spindelaufnahmeöffnung (60) anliegender Ringelemente (158, 156) aufweist.

6. Kugelventil nach einem der Ansprüche 1 bis 5, wobei eine äußerste Umfangsfläche jedes der genannten Sitzringe (112, 114) von der äußeren zylindrischen Seitenwand der betreffenden ringförmigen Vertiefung (56, 96) begrenzt ist.

7. Kugelventil nach einem der Ansprüche 1 bis 6, wobei das genannte Ventilkugel (20) für einen begrenzten Bewegungsbereich axial zur Ventilkammer (18) montiert ist und in dem elastische O-Ringe (120, 122) die betreffenden Muffenabschnitte (54, 92) eng umgeben und an den betreffenden Endwänden (42, 91) anliegen und die genannten O-Ringe (120, 122) jeweils auf Maß gebracht sind, um an einem Ende des betreffenden Sitzrings (112 oder 114) anzuliegen und Letzeren dadurch durch einen Abschnitt des Axialbewegungsbereichs des Letzteren hindurch mit seinem anderen Ende (116) in Dichtungseingriff mit dem Ventilkugel (20) zu drücken und die axiale Bewegung der Kugel (20) in Richtung des betreffenden Muffenabschnitts (54 oder 92) zu begrenzen und die Kugel (20) dadurch daran zu hindern, mit einem derartigen Muffenabschnitt (54 oder 92) in Eingriff zu kommen.

8. Kugelventil nach Anspruch 7, wobei die genannten Sitzringe (112, 114) jeweils relativ kurze, an ihren von der Kugel (20) fernen Enden angeordnete Lippen (113) aufweisen und die genannten Lippen (113) auf radial entgegengesetzten Seiten des betreffenden O-Rings (120, 122) axial zu den Sitzringen (112, 114) verlaufen.

9. Kugelventil nach Anspruch 7 oder 8, wobei jeder der genannten O-Ringe (120, 122) durch axiale Bewegung der Ventilkugel (20) in eine Richtung auf ihren betreffenden Muffenabschnitt (54 oder 92) zu zusammengedrückt wird und das Gesamtvolumen der genannten Sitzringe (112, 114) auf das Volumen ihrer betreffenden ringförmigen Vertiefungen (56, 96) bezogen wird, um die Verdichtung der O-Ringe (120, 122) auf einen Punkt zu begrenzen, so daß zwischen der Kugel (20) und dem betreffenden Muffenabschnitt (54 oder 92) kein Kontakt stattfinden kann.

10. Kugelventil nach einem der Ansprüche 1 bis 9, wobei das genannte Spindeldichtungsmittel (158) einen zwischen dem Flansch (138) und der Spindelschulter (140) angeordneten Dichtungsring (158) und einen zwischen dem genannten Dichtungsring (158) und dem genannten Flansch (138) angeordneten Stützring (156) umfaßt.

11. Kugelventil nach Anspruch 10, wobei der genannte Dichtungsring (158) einen zwischen der genannten Spindel (130) und der Wand der zylindrischen Spindelaufnahmeöffnung (60) radial zusammengedrückten O-Ring umfaßt.

12. Kugelventil nach einem der Ansprüche 1 bis 11, wobei die genannte Spindel (130) von einem lösbar mit dem äußeren Ende der genannten Spindel (130) verbundenen Griff (26) in einer äußeren Position gehalten wird.

13. Kugelventil nach einem der vorangehenden Ansprüche, bei dem jeder der genannten Gehäuseteile (14, 16) ein Paar nach außen verlaufende Flanschabschnitte (32, 34, 78, 80) hat, das mit ausgerichteten Öffnungen zum Aufnehmen von Verbindungsmitteln (82, 84) zum Verbinden der Gehäuseteile (14, 16) miteinander versehen ist.

## Revendications

1. Robinet à boisseau sphérique comprenant un corps de robinet (12) réalisé avec des premier et deuxième composants de corps unitaires (14 et 16) fixés de manière détachable l'un à l'autre de telle sorte que le deuxième composant de corps (16) ferme une chambre de soupape (18), les premier et deuxième composants de corps (14, 16) comportant respectivement des premier et deuxième passages d'écoulement alignés axialement (48 et 86) s'ouvrant dans ladite chambre de soupape (18) à travers les parois d'extrémités (42 et 91) de celle-ci, un boisseau sphérique (20) dans la chambre de soupape (18), des sièges amovibles (112, 114) disposés dans ladite chambre de soupape (18) et chargés préliminairement pour s'engager avec ledit boisseau sphérique (20), une tige de commande (130) s'étendant à travers une ouverture de réception de tige (60) dans le premier composant de corps (14) pour tourner le boisseau (20), et un moyen d'étanchéité de tige (158) pour sceller la tige (130) avec l'ouverture de réception de tige (60), le premier composant de corps (14) ayant un épaulement tourné vers l'intérieur (65) à travers duquel l'ouverture de réception de tige (60) s'étend à l'extérieur du premier composant de corps (14) et la tige de commande (130) ayant une bride s'étendant vers l'extérieur (138) située axialement vers l'intérieur de l'épaulement tourné vers l'intérieur (65); dans lequel le premier composant de corps (14) a une première section de manchon (54) formée autour du premier passage d'écoulement (48) qui s'étend axialement vers l'intérieur de la chambre de soupape (18) et définit avec une surface interne s'étendant axialement, espacée radialement vers l'extérieur du premier composant de corps (14) un premier évidement annulaire (56) ; et dans lequel le deuxième composant de corps (16) a une deuxième section interne et une troisième section externe de manchon intégrantes espacées radialement (92, 94) s'étendant axialement vers l'intérieur de ladite chambre de soupape (18) autour dudit deuxième passage d'écoulement (86) pour définir entre eux un deuxième évidement annulaire (96), la deuxième section de manchon interne (92) étant alignée avec la première section de manchon (54) sur le premier composant de corps (14), et la surface interne (98) de la troisième section de manchon externe (94) étant alignée avec ladite surface interne du premier composant de corps, les sièges amovibles (112,114) étant positionnés respectivement dans lesdits premier et deuxième évidements annulaires (56, 96), caractérisé en ce que ladite surface interne (98) du troisième manchon externe (94) et ladite surface interne du premier composant de corps (14) délimitent la chambre de soupape (18) radialement de telle sorte qu'elle soit de diamètre sensiblement uniforme sur toute son étendue telle que définie entre ses parois d'extrémité (42 et 91) et soit au moins du même diamètre que le boisseau sphérique 20; et le moyen d'étanchéité de tige (158) est situé vers l'intérieur de ladite bride (138) et entre ladite bride (138) et un épaulement de tige (140) sur ladite tige de commande (130) et une couronne d'appui élastique (154) est située entre ladite bride (138) et ledit épaulement (65).

2. Robinet à boisseau sphérique selon la revendication 1, dans lequel un anneau d'étanchéité (104) est situé entre ladite troisième section de manchon externe (98) et ledit premier composant de corps (14).

3. Robinet à boisseau sphérique selon la revendication 1 ou 2, dans lequel ladite chambre de soupape (18) a un logement cylindrique élargi (44) formé à l'extrémité extérieure de celle-ci, ledit logement cylindrique (44) étant dimensionné pour recevoir ladite troisième section de manchon externe (94) dudit deuxième composant de corps (16) et pour définir une chambre annulaire (102) entre ladite section de manchon externe (94) et ledit premier composant de corps (14).

4. Robinet à boisseau sphérique selon la revendication 3, dans lequel lesdits premier et deuxième composants de corps (14, 16) sont étanchéifiés l'un par rapport à l'autre par un anneau d'étanchéité (104) situé dans ladite chambre annulaire (102).

5. Robinet à boisseau sphérique selon l'une quelconque des revendications 1 à 4, dans lequel ledit moyen d'étanchéité de tige comprend une paire d'éléments d'anneau (158,156) engagés étroitement avec la paroi de ladite ouverture de réception de tige (60).

6. Robinet à boisseau sphérique selon l'une quelconque des revendications 1 à 5, dans lequel une surface circonférentielle située le plus à l'extérieur de chacun desdits sièges amovibles (112,114) est limitée par la paroi latérale cylindrique externe de l'évidement annulaire respectif (56,96).

7. Robinet à boisseau sphérique selon l'une quelconque des revendications 1 à 6, dans lequel ledit boisseau sphérique (20) est monté pour une plage limitée de mouvement axialement par rapport à la chambre de soupape (18), et dans lequel des joints toriques élastiques (120,122) entourent étroitement les sections de manchon respectives (54,92) et engagent les parois d'extrémité respectives (42,91), et lesdits joints toriques (120,122) sont chacun dimensionnés pour engager une extrémité du siège amovible respectif (112 ou 114) et pousser ainsi ce dernier par son autre extrémité (116) en un engagement étanche avec le boisseau sphérique (20) à travers une partie de la plage de mouvement axial de ce dernier, et pour limiter le mouvement axial du boisseau (20) vers la section de manchon respective (54 ou 92) et empêcher ainsi le boisseau (20) d'engager une telle section de manchon (54 ou 92).

8. Robinet à boisseau sphérique selon la revendication 7, dans lequel lesdits sièges amovibles (112,114) comportent chacun des lèvres relativement courtes (113) situées sur les extrémités de ceux-ci, éloignées du boisseau (20), et lesdites lèvres (113) s'étendent axialement par rapport aux sièges amovibles (112,114) sur des côtés radialement opposés du joint torique respectif (120,122).

9. Robinet à boisseau sphérique selon la revendication 7 ou 8, dans lequel chacun desdits joints toriques (120,122) est comprimé par le mouvement axial du boisseau sphérique (20) dans une direction vers sa section de manchon respective (54 ou 92) et le volume total desdits sièges amovibles (112,114) est lié au volume de leurs évidements annulaires respectifs (56,96) pour limiter la compression des joints toriques (120,122) jusqu'à un point tel que le contact entre le boisseau (20) et la section de manchon respective (54 ou 92) ne peut pas se produire.

10. Robinet à boisseau sphérique selon l'une quelconque des revendications 1 à 9, dans lequel ledit moyen d'étanchéité de tige (158) comprend un anneau d'étanchéité (158) situé entre la bride (138) et l'épaulement de tige (140) et une bague d'appui (156) située entre ledit anneau d'étanchéité (158) et ladite bride (138).

11. Robinet à boisseau sphérique selon la revendication 10, dans lequel ledit anneau d'étanchéité (158) comprend un joint torique comprimé radialement entre ladite tige (130) et la paroi de l'ouverture de réception de tige cylindrique (60).

12. Robinet à boisseau sphérique selon l'une quelconque des revendications 1 à 11, dans lequel ladite tige (130) est maintenue dans une position externe par un levier (26) raccordé de manière détachable à l'extrémité externe de ladite tige (130).

13. Robinet à boisseau sphérique selon l'une quelconque des revendications précédentes, dans lequel chacun desdits composants de corps (14,16) a une paire de sections de bride s'étendant vers l'extérieur (32,34,78,80) munies d'ouvertures alignées pour recevoir un moyen de connexion (82,84) pour interconnecter les composants de corps (14,16).
